# EUROPÄISCHE PATENTSCHRIFT

(11) **EP 1 715 313 B1**
(45) Veröffentlichungstag und Bekanntmachung des Hinweises auf die Patenterteilung: **21.05.2008**
(21) Anmeldenummer: 06006461.5
(22) Anmeldetag: 29.03.2006
(51) Int. Cl.: G01J 3/46

(54) **Lichtkontrasttaster zur Erkennung von Marken**
Light contrast scanner for identifying marks
Palpeur de contrastes lumineux destiné à la reconnaissance de marques

(30) Priorität: 18.04.2005 DE 102005017901
(43) Veröffentlichungstag der Anmeldung: 25.10.2006
(73) Patentinhaber: SICK AG, 79183 Waldkirch (DE)
(72) Erfinder: Hirt, Günter, 77790 Steinach (DE); Opfolter, Matthias, 79211 Denzlingen (DE)
(74) Vertreter: Ludewigt, Christoph

(56) Entgegenhaltungen:
- EP-A- 0 992 771
- EP-A- 0 994 334
- PATENT ABSTRACTS OF JAPAN Bd. 2002, Nr. 09, 4. September 2002 (2002-09-04) & JP 2002 133932 A (CASIO COMPUT CO LTD), 10. Mai 2002 (2002-05-10)

## Beschreibung

Die Erfindung betrifft einen Lichtkontrasttaster zur Erkennung von Marken und/oder Farben nach dem Oberbegriff des Anspruchs 1.

Aus der DE 198 46 002 A1 ist ein Lichtkontrasttaster zur Erkennung von Marken bekannt. Der Lichtkontrasttaster beinhaltet einen Lichtsender zum Aussenden von Sendelicht durch eine Sendeoptik, einen Lichtempfänger zum Empfang von reflektiertem oder remittiertem Sendelicht und eine Steuer- und Auswerteschaltung. Der Lichtsender ist zum Aussenden von Sendelicht mehrerer verschiedener Testwellenlängenbereiche ausgebildet. Die verschiedenen Farben werden zu einem gemeinsamen Sendestrahl mittels einer Zylinderlinse zusammengeführt beziehungsweise gemischt.

Dieser Lichtkontrasttaster weist jedoch wesentliche Nachteile auf. So benötigt der Lichtkontrasttaster eine mehrteilige und aufwändige Sendeoptik zur räumlich überlappenden Abbildung des Sendelichts für mehrere Testwellenlängenbereiche, so dass der überlappende Bereich einen gemeinsamen Überwachungsbereich des Lichtkontrasttasters bildet. Die Zylinderlinse ist ein Teil der Sendeoptik, durch die das Sendelicht eines Sendeelements letztlich jeweils als ein Querschnitt längsovalförmiger Sendestrahlen auf den Überwachungsbereich abbildbar ist. Durch die Zylinderlinse werden Farben nur unzureichend gemischt. Aufwändig ist die Montage, die Herstellung und die Ausrichtung der einzelnen Teile der Sendeoptik zueinander. Dadurch ist die Herstellung eines solchen Lichtkontrasttasters kostenintensiv. Die mehrteilige Sendeoptik und insbesondere die Zylinderlinse benötigen durch ihre Größe und die notwendigen Abstände sehr viel Platz. Gerade bei dieser Art von Sensoren ist es aber wünschenswert besonders kleine Bauformen zu realisieren.

Einen anderen Lichtkontrasttaster zur Erkennung von Farben ist aus der EP 0 994 334 A2 bekannt.

Der Erfindung liegt die Aufgabe zugrunde, einen verbesserten Lichtkontrasttaster zur Erkennung von Marken und/oder Farben bereitzustellen.

Die Aufgabe wird erfindungsgemäß nach Anspruch 1 dadurch gelöst, dass der Lichtkontrasttaster zur Erkennung von Marken und/oder Farben mit einem Lichtsender mit räumlich benachbarten Sendeelementen, insbesondere Lichtemissionsdioden zum Aussenden von Sendelicht mehrerer verschiedener Wellenlängenbereiche, insbesondere im roten, grünen und blauen Wellenlängenbereich des Lichtes, ausgebildet ist. Weiterhin beinhaltet der Lichtkontrasttaster eine Sendeoptik. Darüber hinaus ist ein Lichtempfänger zum Empfang von reflektiertem oder remittiertem Sendelicht vorgesehen. In dem Lichtkontrasttaster ist eine Steuer- und Auswerteschaltung angebracht. Wenigstens ein Mittel zum Durchmischen verschiedener Farbanteile des Sendelichts ist vorhanden, wobei das Mittel durch einen Lichtleiter gebildet ist und der Lichtsender und der Lichtleiter in einem gemeinsamen Tubus angeordnet sind.

Der Vorteil dieser erfindungsgemäßen Ausbildung des Lichtkontrasttasters liegt darin, dass die Durchmischung der verschiedenen Farbanteile mit dem sehr preiswerten und für diese Aufgabe optimal ausgebildeten Lichtleiter bewerkstelligt wird. Der Lichtleiter eignet sich durch die Eigenschaft, Licht über Totalreflexion weiterzuleiten, ideal für die Lösung, verschiedene Farbanteile auf kleinstem Raum zu durchmischen. Gerade die kleine Bauform stellt einen großen Vorteil für diese Art von Sensoren dar. So können mit Hilfe des verwendeten Lichtleiters die Kosten für einen solchen Sensor enorm reduziert und gleichzeitig kann die Baugröße des Sensors verringert werden.

Dadurch dass der Lichtsender und der Lichtleiter in einem gemeinsamen Tubus angeordnet sind stellt dieser eine gemeinsame Basis für die Montage des Lichtsen-ders und des Lichtleiters dar. Die Referenzmaße der Anordnung werden dabei über Montageflächen der Komponenten und entsprechende Anschlagflächen an dem Tubus bestimmt. Auf diese Weise brauchen die Komponenten Lichtsender und Lichtleiter nicht gesondert zueinander ausgerichtet werden.

Die Länge des Lichtleiters beträgt vorteilhaft wenigstens das 3,5-fache einer Querabmessung des Lichtleiters. Durch dieses Verhältnis der Länge des Lichtleiters zum Durchmesser wird eine ausreichend gute Durchmischung durch häufige Reflexionen bei gleichzeitig geringsten baulichen Abmessungen erreicht. Bei einem Durchmesser von ca. 2 mm beträgt die Länge des Lichtleiters nur ca. 7 mm.

Zusätzlich ist der Lichtleiter an der dem Lichtsender zugewandten Einkoppelfläche vorteilhaft als Linse ausgebildet ist. Durch diese Linse wird das Licht des Lichtsenders mit räumlich nebeneinander benachbarten Sendeelementen, die in einer Reihe nebeneinander angeordnet sind, insbesondere Lichtemissionsdioden zum Aussenden von Sendelicht mehrerer verschiedener Wellenlängenbereiche, insbesondere im roten, grünen und blauen Wellenlängenbereich des Lichtes besonders optimal in den Lichtleiter eingekoppelt. Die Linse ist dabei einstückig mit dem Lichtleiter ausgebildet. Vorteilhaft kann bei Einkopplung mit einer Linse ein im Querschnitt kleiner und damit auch in seiner Länge kurzer, entsprechend preisgünstiger und eine kleine Bauform erlaubender Lichtleiter eingesetzt werden.

Der Lichtleiter weist vorteilhaft einen rechteckigen Querschnitt auf. Dadurch kann das Licht von räumlich in einer Reihe benachbarten Sendeelemente besonders gut in den Lichtleiter gelangen. Der rechteckige Querschnitt ist dabei besonders auf die Anordnung der Sendelemente angepasst. Die Rechteckform bietet auch den Vorteil einer sehr kompakten Ausführung des Lichtleiters. Die Länge des Lichtleiters beträgt dazu wenigstens das 7-fache der kürzeren Seite des rechteckigen Querschnitts.

Der Lichtleiter besteht aus für das Sendelicht transparentem Kunststoff. Durch die Verwendung von Kunststoff ist der Lichtleiter besonders preisgünstig herstellbar. Insbesondere geeignete Herstellungsverfahren wie das Spritzgussverfahren ermöglichen die Herstellung des Lichtleiters mit geringen Kosten. Der Lichtleiter aus Kunststoff ist leicht zu verarbeiten und zu montieren. Bruchgefahr wie z.B. bei Glas besteht nicht. Durch das geringe Gewicht des Lichtleiters eignet sich dieser besonders bei hohen Schwing- und Schockanforderungen an den Lichtkontrasttaster.

Der Lichtleiter weist an seiner Lichtaustrittsseite eine Montageplatte auf, die mit dem Lichtleiter vorteilhaft einstückig verbunden ist. Auf diese Weise kann die Montageplatte des Lichtleiters zusammen mit dem Lichtleiter in einem Verfahrensschritt hergestellt werden. Die Montageplatte des Lichtleiters ist somit auf den Lichtleiter genau ausgerichtet. Dies ermöglicht eine besonders einfache Montage des Lichtleiters.

Die Montageplatte ist vorteilhaft nur an den Ecken des rechteckigen Querschnitts mit dem Lichtleiter verbunden und senkrecht zu dem Lichtleiter angeordnet. Durch die ausschließliche Verbindung der Montageplatte an den Ecken des Lichtleiters wird die Eigenschaft der Totalreflexion des Lichtleiters geringst möglich beeinträchtigt. Die senkrechte Anordnung der Montageplatte zum Lichtleiter ermöglicht eine besonders einfache Montage des Lichtleiters, wenn z.B. die Montageplatte gegen einen Anschlag montiert wird.

Der Tubus weist vorteilhaft eine erste Kammer, eine zweite Kammer und eine schlauchförmige Verbindung der beiden Kammern auf. In der schlauchförmigen Verbindung ist der Lichtleiter angeordnet und die Einkoppelfläche des Lichtleiters ist in Richtung der ersten Kammer angeordnet, in der der Lichtsender angeordnet wird. Die Anordnung der Kammern und der schlauchförmigen Verbindung erlaubt einen geschützten modularen Aufbau der Komponenten an und in dem Tubus.

In der zweiten Kammer und an der Lichtaustrittsseite des Lichtleiters ist eine Blende angeordnet. Die Blende wird vorteilhaft ebenfalls in dem Tubus montiert und ist dadurch zu den anderen Komponenten insbesondere zu der Lichtaustrittseite des Lichtleiters ausgerichtet. Die Blende weist vorteilhaft einen Einrastmechanismus auf zur Montage in der zweiten Kammer des Tubus. Der Einrastmechanismus ist dabei einstückig in die Blende integriert. Die Blende kann somit sehr preisgünstig hergestellt und montiert werden. Die zweite Kammer weist zur Montage der Blende eine Einschuböffnung auf zum Einschieben der Blende in den Tubus. Durch den Einschub im Tubus wird die Blende exakt positioniert und ist ohne weitere Montageschritte richtig ausgerichtet. Der Einrastmechanismus hält die Blende in der richtigen Position. Bei Beanspruchungen wie Schock oder Vibration kann die Blende sich nicht aus der vorgesehenen Position bewegen.

Um die Genauigkeit der Blendenöffnung zu erhöhen ist die Blende vorzugsweise aus Metall gebildet. Dadurch kann die Blende sehr präzise ausgebildet werden. Durch die Verwendung von Metall kann die Blende auch sehr dünn und damit platzsparend ausgebildet werden.

In Weiterbildung der Erfindung wird die Montageplatte des Lichtleiters in dem Tubus mittels der eingeschobenen Blende positioniert gehalten. Vor dem Einschieben der Blende wird der Lichtleiter aus Richtung der zweiten Kammer in die schlauchförmige Verbindung eingeschoben. In der zweiten Kammer ist eine Montagenplattenaufnahme vorgesehen mit keilförmig angeordneten Seiten zur justierten Aufnahme der Montageplatte. Durch das Einschieben der Blende wird der Lichtleiter mit der Montageplatte in der Montagenplattenaufnahme gehalten und positioniert. Der Lichtleiter und die Blende sind somit in dem Tubus einfach und ohne zusätzliche Montagekomponenten wie Kleber oder Schrauben angeordnet.

In Weiterbildung der Erfindung ist der Lichtsender auf einer Leiterplatte angeordnet, und die erste Kammer des Tubus weist eine Leiterplattenaufnahme auf. Der Tubus weist einen Schlitz zur Aufnahme einer Nase der Leiterplatte auf und einen Keilschnappverschluss zur Aufnahme einer der Nase abgewandten Seite der Leiterplatte, die als stumpfe Spitze ausgebildet ist. Mit dieser Vorrichtung können die Leiterplatte und die darauf angeordneten Lichtsender sehr einfach und exakt in der ersten Kammer des Tubus montiert werden. Die Nase der Leiterplatte dient zur Fixierung und als Anschlag für die Leiterplatte. Mit dem Keilschnappverschluss wird die Leiterplatte an dem gegenüberliegenden Ende in Position gehalten. Die Ausführung des mit dem Keilschnappverschluss gehaltenen Endes als stumpfe Spitze ermöglicht eine spielfreie Arretierung der Leiterplatte in dem Tubus. Auf diese Weise sind die auf der Leiterplatte aufgebrachten Sendeelemente, insbesondere Lichtemissionsdioden exakt zu der Linse des Lichtleiters, der durch die schlauchförmige Verbindung in die erste Kammer ragt, ausgerichtet und montiert. Für die exakte Ausrichtung der Leiterplatte weist die Leiterplattenaufnahme zusätzlich zwei benachbarte Anschlagseiten auf, gegen die die Leiterplatte durch den Keilschnappverschluss gespannt in Position gehalten ist. Die Anschlagseiten sind durch Kammerwände der ersten Kammer gebildet. Die Ausrichtung des optischen System aus Lichtsender mit Leiterplatte, Lichtleiter und Blende ist damit in allen drei Raumrichtungen in dem Tubus gewährleistet. Sämtliche Lichtsendekomponenten sind als Baugruppe in dem Tubus exakt zueinander positioniert und zusammengefasst.

Die Leiterplatte ist vorteilhaft beidseitig mit Sendelementen bestückbar. Dadurch können mit nur einer Leiterplatte verschiedene Bestückungsvarianten der Leiterplatte realisiert werden. So kann die zweite Bestückungsseite mit alternativen Lichtemissionsdioden mit anderen Kennzahlen bestückt werden. Dies erhöht nicht nur in einfachster Weise die Variantenvielfalt, sondern es kann bei Lieferengpässen der Lichtemissionsdioden auch ohne konstruktive Änderungen auf andere Dioden zurückgegriffen werden.

In Weiterbildung der Erfindung weist der Tubus eine Öffnung für ein Monitorempfangselement auf, insbesondere eine Monitordiode. Durch diese Monitordiode kann die Wellenlänge und die Intensität sowie das Schaltverhalten der Lichtemissionsdioden überwacht oder überprüft werden, indem beispielsweise Streulicht des eigentlichen Sendelichtes beobachtet wird. Insbesondere wenn die Intensität der Sendeelemente infolge von Alterung nachlässt, kann über die Steuerschaltung die Intensität der Sendeelemente nachgeregelt werden. Durch die Öffnung im Tubus kann Streulicht direkt von den Sendeelementen oder Streulicht an der Montageplatte des Lichtleiters eingesehen werden.

Der Tubus weist Ausrichtzapfen zur ausgerichteten Aufnahme in ein Gehäuse des Lichtkontrasttasters auf. Dadurch wird der Tubus mit den optischen Komponenten vorteilhaft direkt am Gehäuse des Lichtkontrasttasters ausgerichtet. Die Ausrichtzapfen des Tubus und Zapfenöffnungen des Gehäuses sind mit einer Genauigkeit hergestellt, die das optische System erfordert und die einwandfreie Funktion garantiert.

Im Folgenden wird die Erfindung an Hand von Ausführungsbeispielen unter Bezugnahme auf die Zeichnungen im Einzelnen erläutert. In der Zeichnung zeigen:
- Figur 1: eine schematische Darstellung eines erfindungsgemäßen Lichtkontrasttasters;
- Figur 2 und 3: schematische Darstellungen eines Lichtleiters in der Seitenansicht und in perspektivischer Ansicht;
- Figur 4: eine Explosionsdarstellung eines Tubus mit einem Lichtsender, dem Lichtleiter, einer Blende und einer Sendeoptik;
- Figur 5: eine schematische Darstellung der Komponenten aus Figur 4 mit dargestelltem Lichtweg;
- Figur 6: eine weitere schematische Darstellung des Tubus aus einem anderen Blickwinkel ohne optische Komponenten;
- Figur 7: eine weitere schematische Darstellung des Tubus mit Blickrichtung in die zweite Kammer;
- Figur 8: eine schematische Darstellung des Lichtsenders;
- Figur 9: eine weitere schematische Darstellung des Tubus mit einem Monitorempfangselement.

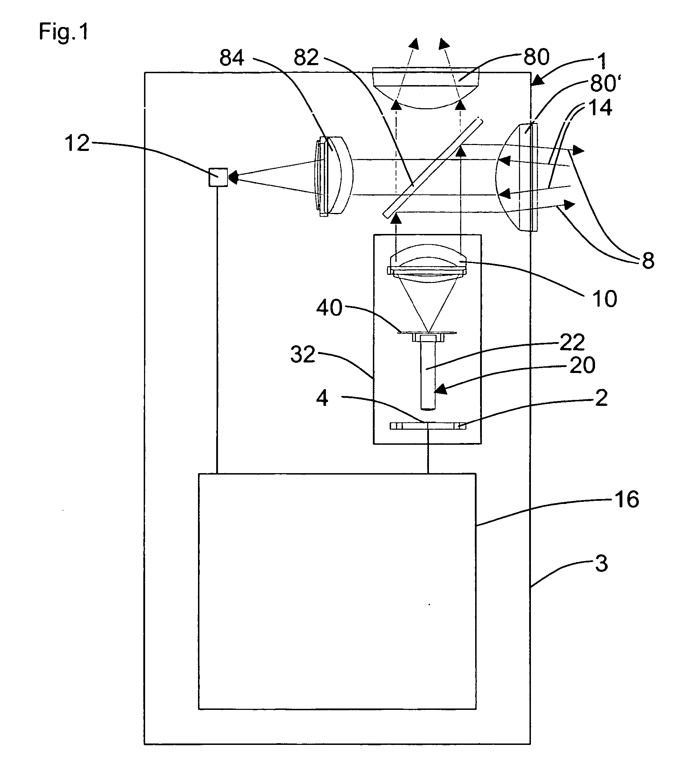

Figur 1 zeigt eine schematische Darstellung eines Lichtkontrasttasters 1. Der Lichtkontrasttaster ist in einem Gehäuse 3 untergebracht. In dem Gehäuse 3 ist ein Lichtsender 2 und ein Lichtempfänger 12 angeordnet. Der Lichtsender 2 sowie ein Lichtempfänger 12 sind mit einer Steuer- und Auswerteschaltung 16 verbunden.

Der Lichtsender 2 ist in einem Tubus 32 angeordnet. In dem Tubus 32 ist weiterhin ein Lichtleiter 22, eine Blende 40 und eine Sendeoptik 10 angeordnet. Das vom Lichtsender 2 ausgehende Sendelicht trifft in den Lichtleiter und gelangt nach der Blende 40 und der Sendeoptik 10 auf einen Strahlteiler 82. Der Strahlteiler 82 teilt das Sendelicht in einen Anteil in Richtung auf eine erste Objektivoptik 80 und in einen Anteil in Richtung eine zweite Objektivoptik 80' auf.

Aufgrund dieses Strahlteilers 82 und der zwei Objektivoptiken 80 und 80' kann der Lichtkontrasttaster 1 wahlweise das Sendelicht bzw. auch Empfangslicht in zwei verschiedene Richtungen aussenden bzw. empfangen. Eine der beiden Öffnungen wird im Betrieb des Lichtkontrasttasters 1 durch eine Verschlusskappe geschlossen. Dem Anwender ist es dadurch flexibel möglich eine der beiden Lichtaustrittsseiten für seine Anwendung zu nutzen. Der Lichtsender 2 ist derart ausgebildet, dass über jede der Objektivoptiken 80 und 80' genügend Licht zur Farberkennung ausgesendet wird. So ist es möglich ohne mechanische Veränderungen einen flexiblen Lichtkontrasttaster 1 herzustellen, der über zwei Lichtaustritte verfügt, die einzeln zur Farberkennung genutzt werden können.

Über die Objektivoptiken 80 oder 80' gelangt das Sendelicht 8 auf eine Kontrastmarke oder eine Farbmarke. Von dieser Marke wird das Licht reflektiert und trifft wieder auf die Objektivoptik 80 oder 80'. Reflektiertes Licht 14 trifft auf den Strahlteiler 82 und danach auf eine Empfangsoptik 84. Über die Empfangsoptik 84 wird das empfangene Licht 14 auf den Lichtempfänger 12 fokussiert. Über die Steuer- und Auswerteschaltung 16 wird das Signal des Lichtempfängers 12 ausgewertet und zum Beispiel ein Schaltsignal abhängig von der detektierten Farbe erzeugt.

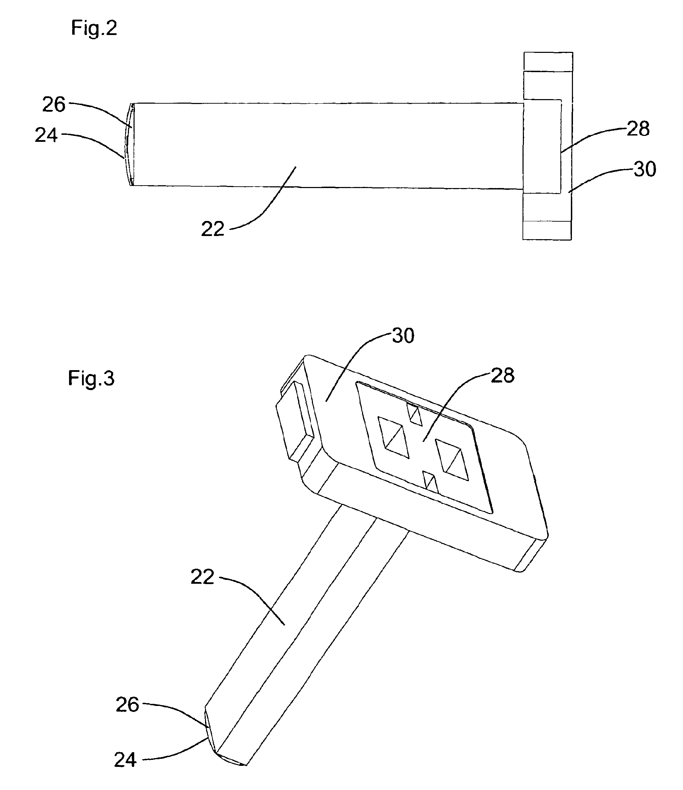

In Figur 2 ist der Lichtleiter 22 in einer Seitenansicht dargestellt. Der Lichtleiter 22 weist eine Einkoppelfläche 24 auf. Über diese Einkoppelfläche 24 gelangt das Licht des Lichtsenders 2 in den Lichtleiter 22. Zur optimalen Einkopplung ist die Einkoppelfläche 24 als Linse 26 ausgeprägt. Die Linse 26 ist einstückig mit dem Lichtleiter 22 verbunden. Dadurch entsteht keine zusätzliche optische Übergangsfläche zwischen Linse 26 und Lichtleiter 22. Der Lichtleiter 22 ist länglich geformt mit einem Längen- zu Querschnittsabmessung-Verhältnis von wenigstens 3,5. Der Lichtleiter 22 weist an der gegenüberliegenden Seite der Einkoppelfläche 24, an einer Lichtaustrittsseite 28 eine Montageplatte 30 auf. Die Montageplatte 30 ist rechtwinklig zu dem Lichtleiter 22 angeordnet.

In Figur 3 ist der Lichtleiter 22 in einer perspektivischen Ansicht dargestellt zur Verdeutlichung der konstruktiven Ausprägung des Lichtleiters 22. Der längliche Lichtleiter 22 ist mit einem rechteckigen Querschnitt ausgeformt. Durch diese Rechteckform kann über die entsprechend ausgeprägte Linse 26 das Licht von nebeneinander in einer Reihe angeordneten Sendelementen besonders gut in den Lichtleiter 22 gelangen. In dem Lichtleiter 22 werden die verschiedenen Farbanteile des Sendelichts durch mehrfache Totalreflexion des Lichtes auf der Länge des Lichtleiters 22 gemischt. Der Lichtleiter 22 ist zur Aufrechterhaltung der Totalreflexionseigenschaften des Lichtleiters 22 nur an den Ecken des Lichtleiters 22 mit der Montageplatte 30 verbunden. Nachdem das Licht den Lichtleiter 22 durchlaufen hat, tritt es an der Lichtaustrittsseite 28 des Lichtleiters 22 aus. Zur optimalen Befestigung ist die Montageplatte 30 senkrecht zum Lichtleiter 22 angeordnet. Die Montageplatte 30 ist einstückig mit einem festen Referenzmaß mit dem Lichtleiter 22 verbunden. Auf diese Weise kann der Lichtleiter 22 über die Montageplatte 30 ausgerichtet und in dem Tubus 32 montiert werden.

Der Lichtleiter 22 besteht vorteilhaft aus einem transparenten Kunststoff. Der Kunststoff eignet sich besonders gut für die kostengünstige Herstellung im Spritzgussverfahren. Sowohl das Material als auch der Herstellungsprozess ist dabei besonders kostengünstig. Der Kunststoff ist dabei besonders stabil und leicht im Vergleich zu anderen Werkstoffen wie z.B. Glas. Der Kunststoff eignet sich auch besonders gut für hohe Anforderungen an Schwing- und Schockbelastungen des Lichtkontrasttasters 1. Aufgrund der hohen Stabilität und des geringen Gewichtes des Lichtleiters 22 kommt es zu minimalen mechanischen Beanspruchungen des Lichtleiters 22 und der mit dem Lichtleiter 22 verbundenen Komponenten.

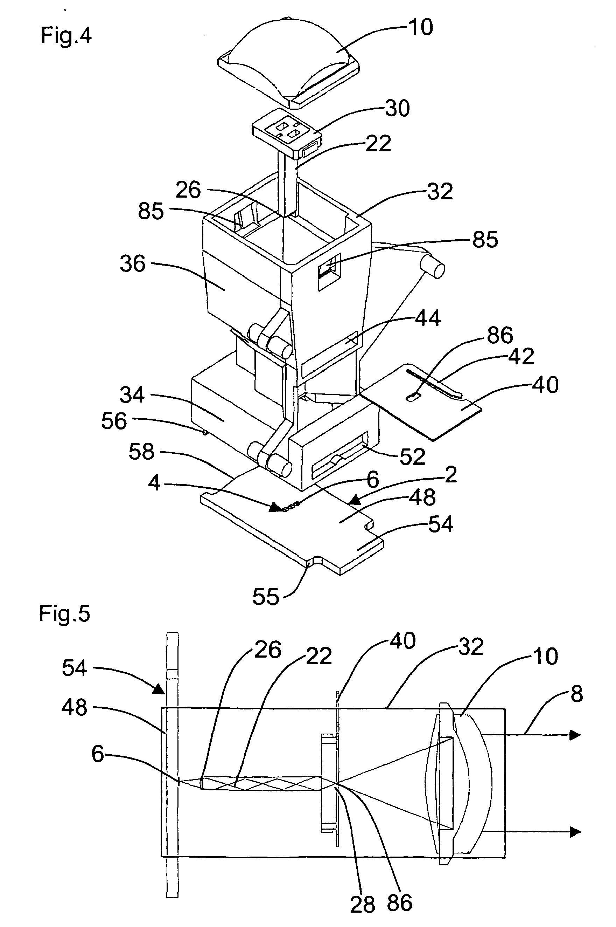

Figur 4 zeigt den Tubus 32 in einer Explosionszeichnung mit dem Lichtsender 2, dem Lichtleiter 22, der Blende 40 und der Sendeoptik 10, die allesamt in dem Tubus angeordnet werden. Der Tubus 32 besteht aus einem lichtabsorbierenden Kunststoffteil und ist vorzugsweise aus schwarzem Kunststoff ausgeführt zur Vermeidung unnötiger Lichtreflexionen. Der Tubus 32 besteht aus einer ersten Kammer 34 zur Aufnahme des Lichtsenders 2. Eine schlauchförmige Verbindung 38 verbindet die erste Kammer 34 mit einer zweiten Kammer 36. Weiterhin weist der Tubus 32 eine Einschuböffnung 44 für die Blende 40, einen Schlitz 52 und einen Keilschnappverschluss 56 für den Lichtsender 2 auf.

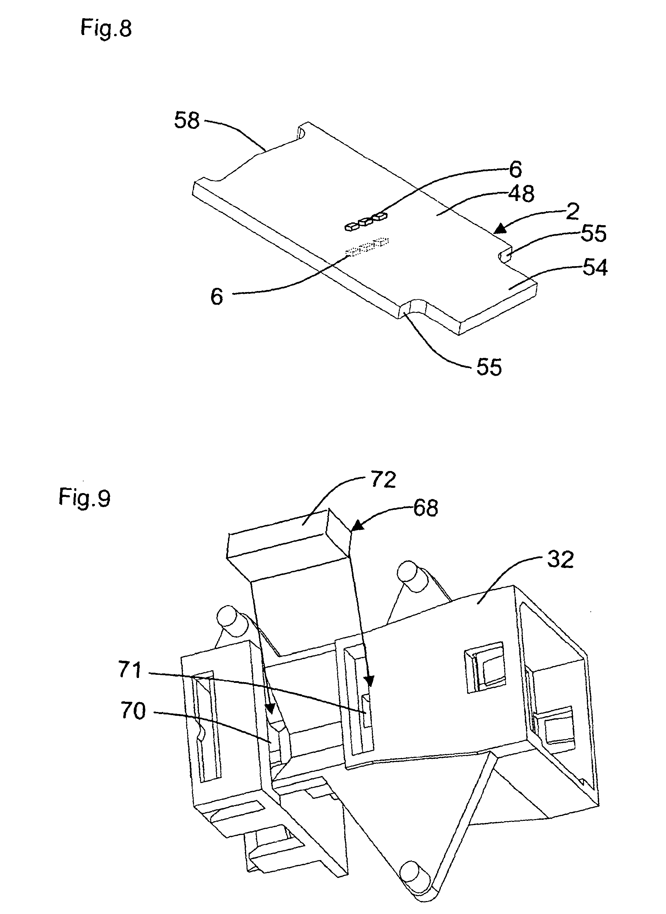

Der Lichtsender 2 besteht aus einer Leiterplatte 48 und den auf der Leiterplatte 48 aufgebrachten Sendeelementen 4. Die Sendelemente 4 sind bevorzugt als Lichtemissionsdioden 6 zum Aussenden des Sendelichts 8 mehrerer verschiedener Wellenlängenbereiche ausgebildet. Insbesondere entsprechen diese Wellenlängen den Wellenlängen von rotem, grünen und blauen Licht. Die Lichtemissionsdioden 6 sind in einer Reihe nebeneinander mittels Lötmontage angeordnet. In Figur 8 ist der Lichtsender 2 separat dargestellt. Weitere Bauteile zur Ansteuerung der Lichtemissionsdioden 6 können auf der Leiterplatte 48 vorgesehen sein. Diese sind in Figur 8 nicht dargestellt. Die Leiterplatte 48 weist zwei Bestückungsseiten für Bauteile und für die Lichtemissionsdioden 6 auf. Auf der zweiten Bestückungsseite können Lichtemissionsdioden einer anderen Bauform vorgesehen werden. Sollte es zu Lieferengpässen der Lichtemissionsdioden 6 auf der ersten Bestückungsseite kommen, können die Lichtemissionsdioden 6 aus einer zweiten Lieferquelle auf der Rückseite bestückt werden und die Leiterplatte 48 einfach umgedreht werden, so dass die Lichtemissionsdioden 6 mit der Leiterplatte 48 zu dem Lichtleiter hin montiert werden kann. Auf der zweiten Bestückungsseite können auch wahlweise Lichtemissionsdioden 6 mit anderen optischen Eigenschaften bestückt werden, um einen Lichtkontrasttaster mit anderen optischen Eigenschaften in ansonsten gleichem Aufbau herzustellen. Die Leiterplatte 48 weist an einer ihrer Seiten eine Nase 54 auf und an der gegenüberliegenden Seite eine stumpfe Spitze 58.

Mit Hilfe der Nase 54 und der stumpfen Spitze 58 wird die Leiterplatte 48 in dem Tubus 32 in der ersten Kammer 34 montiert. Die Leiterplatte 48 wird hierzu mit der Nase 54 in den für die Nase 54 vorgesehenen Schlitz 52 des Tubus 32 schräg eingeschoben. Das Einschieben wird durch Absätze 55 der Leiterplatte 48 begrenzt.

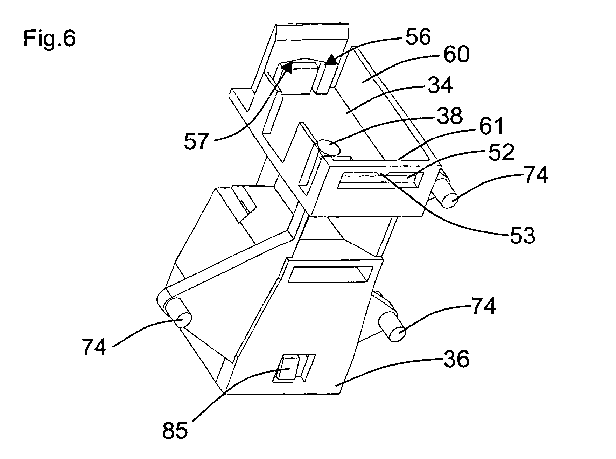

An dem Schlitz 52 ist eine kleine Erhebung 53 angeordnet, mit der die Nase 54 der Leiterplatte 48 in dem Schlitz 52 einklemmbar ist zur spielfreien Aufnahme der Leiterplatte 48. Danach wird die Leiterplatte 48 mit der stumpfen Spitze 58 in einen dafür vorgesehenen Keilschnappverschluss 56 (Fig. 6) des Tubus 32 eingerastet. Durch die stumpfe Spitze 58 und der keilförmigen Aufnahme 57 des Keilschnapperverschlusses 56 wird die Leiterplatte 48 spielfrei und stabil in Position gehalten, indem die Keilflächen der Aufnahme 57 und die Seiten der stumpfen Spitze 58 gegeneinander aufgrund der Spannkraft in Position rutschen. Die Position der Leiterplatte 48 wird zusätzlich durch zwei Begrenzungsflächen 60 und 61 bestimmt, die in einem rechten Winkel zueinander angeordnet und durch zwei Wände der ersten Kammer 34 gebildet sind. Auf diese Weise ist der Lichtsender 2 bestehend aus Leiterplatte 48 und Sendelementen 4 genau positioniert und justiert an dem Tubus 32 angebracht.

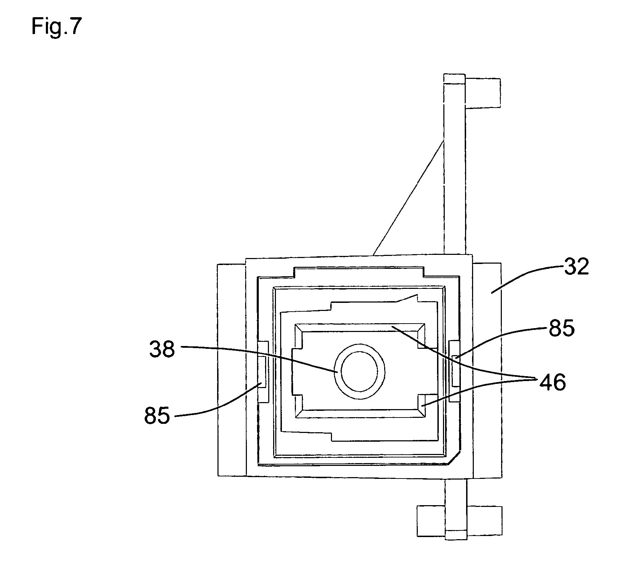

Der Lichtleiter 22 wird von der zweiten Kammer 36 aus in Richtung der ersten Kammer 34 in die schlauchförmige Verbindung 38 eingeschoben. Die Linse 26 des Lichtleiters 22 zeigt dabei in Richtung der ersten Kammer 34. Nach dem Einbau des Lichtleiters 22 ist die Linse 26 des Lichtleiters vor den Lichtemissionsdioden 6 angeordnet. Der Lichtleiter 22 wird durch eine Montagenplattenaufnahme 46 (Fig. 7) zwischen zweiter Kammer 36 und schlauchförmiger Verbindung positioniert und arretiert. In Figur 7 ist ein Blick frontal in die zweite Kammer dargestellt. Dabei ist die schlauchförmige Verbindung 38 mit der Montageplattenaufnahme 46 erkennbar. Die Montageplatte 30 wird durch eine keilförmige Ausprägung der Montagenplattenaufnahme 46 zentriert ausgerichtet. In dieser Position wird der Lichtleiter 22 durch die in die Einschuböffnung 44 eingeschobene Blende 40 gehalten.

Die Blende 40 besteht aus einer rechteckförmigen Platte, die eine Blendenöffnung 86 aufweist (Fig. 4). Die Blende 40 wird vorzugsweise aus Metall hergestellt. Metall hat den Vorteil, dass die Blendenöffnung 86 sehr exakt in den Abmessungen ausgeführt werden kann. Durch die Ausführung in Metall kann die Blende 40 auch sehr dünn ausgeführt werden. Die Blende 40 weist zusätzlich noch einen Einrastmechanismus 42 auf. Nach dem Einschieben der Blende 40 in den Tubus 32 rastet der Einrastmechanismus 42 in den im Tubus 32 vorgesehenen Gegenstück ein. Eine Einschuböffnung 44 für die Blende 40 befindet sich in der zweiten Kammer 36 des Tubus 32. Die Blende 40 wird durch den Einrastmechanismus 42 in der richtigen Position eingrastet und gegen Verschieben gesichert. Wie oben beschrieben wird die Blende 40 direkt hinter der Montageplatte 30 des Lichtleiters 22 eingeschoben und hat dadurch die zusätzliche Funktion, den Lichtleiter 22 in seiner Position zu halten.

Nach dem Anbringen der Blende 40 wird die Sendeoptik 10 montiert. Die Sendeoptik 10 wird an der Öffnung der zweiten Kammer 36 in den Tubus 32 mittels zweier Rastvorrichtungen 85 eingeklipst.

Figur 5 zeigt eine schematische Darstellung der optischen Komponenten aus Figur 4 mit dargestelltem Lichtweg des Sendelichts 8 von dem Lichtsender 2 über den Lichtleiter 22, die Blendenöffnung 86 und die Sendeoptik 10. Der Tubus 32 zur Aufnahme und Befestigung der einzelnen Komponenten ist der Übersichtlichkeit halber als einfacher Kasten dargestellt. Das Sendelicht 8 wird von den Lichtemissionsdioden 6 ausgestrahlt, die direkt vor der Linse 26 des Lichtleiters 22 nebeneinander angeordnet sind. Nach dem Einkoppeln der Lichtstrahlen in den Lichtleiter 22 werden diese in dem Lichtleiter 22 mehrfach totalreflektiert und dadurch optimal durchmischt. Nach dem die Lichtstrahlen optimal durchmischt sind treten sie an der Lichtaustrittsseite 28 aus dem Lichtleiter 22 aus. Nach der Blende 40 treffen die Strahlen auf die Sendeoptik 10, mit der sie parallel ausgerichtet werden. Durch die kleine Blendenöffnung 86 erhält man in vorteilhafter Weise eine möglichst kleine Lichtquelle mit den verschiedenen gut gemischten Farbanteilen. Dadurch kann mittels der weiteren Optik eine gute Abbildung auf den Empfänger erreicht werden.

In Figur 6 ist ein Blick in die erste Kammer 34 dargestellt, in der die schlauchförmige Verbindung 38 für den Lichtleiter zu der zweiten Kammer 36 erkennbar ist. Der Tubus 32 weist weiterhin Ausrichtzapfen 74 auf. Mit Hilfe dieser Ausrichtzapfen 74 kann der Tubus 32 in dem Gehäuse 3 exakt positioniert und in seiner Position gehalten werden. Das Gehäuse weist hierzu Zapfenöffnungen auf, welche die Ausrichtzapfen 74 aufnehmen können.

In dieser Ansicht nach Figur 9 sind zwei Öffnungen 70 und 71 für ein Monitorempfangselement 68 erkennbar. Über diesen Öffnungen 70 und 71 wird das Monitorempfangselement 68 angeordnet. Durch die Öffnung 70 im Tubus 32 ist für das Monitorempfangselement 68 ein Streulichtanteil des Sendelichtes 8 im Bereich der Sendelemente 4 einsehbar. Durch die Öffnung 71 ist andererseits ein Streulichtanteil des Sendelichtes im Bereich der Montageplatte 30 einsehbar. Das Monitorempfangselement 68 ist dabei vorzugsweise als Monitordiode 72 ausgeprägt. Mit Hilfe der Monitordiode 72 kann das Streulicht und damit das Sendelicht 8 überwacht werden. Bei nachlassender Leuchtstärke der Lichtemissionsdioden 6, z.B. aufgrund von Alterung, kann mit Hilfe der Monitordiode 72 und der Auswerte- und Steuereinheit 16 die Lichtemissionsdioden 6 nachgesteuert werden. Mit Hilfe der Monitordiode 72 kann auch generell die Helligkeit oder die Farbzusammensetzung des Sendelichts überwacht und mit Hilfe der Auswerte- und Steuereinheit 16 angepasst und gesteuert werden.

## Patentansprüche

1. Lichtkontrasttaster (1) zur Erkennung von Marken und/oder Farben
- mit einem Lichtsender (2) mit räumlich benachbarten Sendeelementen (4), insbesondere Lichtemissionsdioden (6) zum Aussenden von Sendelicht mehrerer verschiedener Wellenlängenbereiche, insbesondere im roten, grünen und blauen Wellenlängenbereich des Lichtes durch eine Sendeoptik (10),
- mit einem Lichtempfänger (12) zum Empfang von reflektiertem oder remittiertem Sendelicht,
- mit einer Steuer- und Auswerteschaltung (16)
- und mit wenigstens einem Mittel zum Durchmischen (22) verschiedener Farbanteile des Sendelichts und
- das Mittel durch einen Lichtleiter (22) gebildet ist,
**dadurch gekennzeichnet, dass**
- der Lichtsender (2) und der Lichtleiter (22) in einem gemeinsamen Tubus (32) angeordnet sind

2. Lichtkontrasttaster (1) nach Anspruch 1, **dadurch gekennzeichnet, dass** die Länge des Lichtleiters (22) mindestens das 3,5-fache einer Querabmessung beträgt.

3. Lichtkontrasttaster (1) nach einem der vorhergehenden Ansprüche, **dadurch gekennzeichnet, dass** der Lichtleiter (22) an der dem Lichtsender (2) zugewandten Einkoppelfläche als Linse ausgebildet ist.

4. Lichtkontrasttaster (1) nach einem der vorhergehenden Ansprüche, **dadurch gekennzeichnet, dass** der Lichtleiter (22) einen rechteckigen Querschnitt aufweist.

5. Lichtkontrasttaster (1) nach Anspruch 4, **dadurch gekennzeichnet, dass** die Länge des Lichtleiters (22) mehr als das 7-fache der kürzeren Seite des rechteckigen Querschnitts beträgt.

6. Lichtkontrasttaster (1) nach einem der vorhergehenden Ansprüche, **dadurch gekennzeichnet, dass** der Lichtleiter (22) aus für das Sendelicht transparentem Kunststoff besteht.

7. Lichtkontrasttaster (1) nach einem der vorhergehenden Ansprüche, **dadurch gekennzeichnet, dass** der Lichtleiter (22) im Spritzgussverfahren hergestellt ist.

8. Lichtkontrasttaster (1) nach einem der vorhergehenden Ansprüche, **dadurch gekennzeichnet, dass** der Lichtleiter (22) an seiner Lichtaustrittsseite (28) eine Montageplatte (30) aufweist, die mit dem Lichtleiter (22) einstückig ist.

9. Lichtkontrasttaster (1) nach Anspruch 8, **dadurch gekennzeichnet, dass** die Montageplatte (30) nur an den Ecken des rechteckige Querschnitts mit dem Lichtleiter (22) verbunden und senkrecht zu dem Lichtleiter (22) angeordnet ist.

10. Lichtkontrasttaster (1) nach Anspruch 9, **dadurch gekennzeichnet, dass** der Tubus (32) eine erste Kammer (34), eine zweite Kammer (36) und eine schlauchförmige Verbindung (38) der beiden Kammern aufweist.

11. Lichtkontrasttaster (1) nach Anspruch 10, **dadurch gekennzeichnet, dass** in der schlauchförmigen Verbindung (38) der Lichtleiter (22) angeordnet und die Einkoppelfläche (24) des Lichtleiters in Richtung der ersten Kammer (34) angeordnet ist.

12. Lichtkontrastaster (1) nach einem der vorhergehenden Ansprüche, **dadurch gekennzeichnet, dass** an der Lichtaustrittsseite (28) des Lichtleiters (22) eine Blende (40) angeordnet ist.

13. Lichtkontrasttaster (1) nach Anspruch 12, **dadurch gekennzeichnet, dass** die Blende (40) einen Einrastmechanismus (42) zur Montage in der zweiten Kammer (36) des Tubus (32) aufweist.

14. Lichtkontrasttaster (1) nach Anspruch 12 und 13, **dadurch gekennzeichnet, dass** die zweite Kammer (36) eine Einschuböffnung (44) aufweist zum Einschieben der Blende (40).

15. Lichtkontrasttaster (1) nach Anspruch 14, **dadurch gekennzeichnet, dass** mittels der Blende (40) die Montageplatte (30) des Lichtleiters (22) in dem Tubus (32) positioniert gehalten ist.

16. Lichtkontrasttaster (1) nach Anspruch 15, **dadurch gekennzeichnet, dass** in der zweiten Kammer (36) eine Montagenplattenaufnahme (46) vorgesehen ist mit keilförmig angeordneten Seiten zur justierten Aufnahme der Montageplatte (30).

17. Lichtkontrasttaster (1) nach einem der vorhergehenden Ansprüche 10 bis 16, **dadurch gekennzeichnet, dass** der Lichtsender (2) auf einer Leiterplatte (48) angeordnet ist und die erste Kammer (34) eine Leiterplattenaufnahme (57) aufweist, die einen Schlitz (52) zur Aufnahme einer Nase (54) der Leiterplatte (48) und einen Keilschnappverschluss (56) zur Aufnahme einer der Nase 54 abgewandten Seite der Leiterplatte 48 aufweist, die als stumpfe Spitze 58 ausgebildet ist.

18. Lichtkontrasttaster nach Anspruch 17, **dadurch gekennzeichnet, dass** die Leiterplattenaufnahme (57) zwei benachbarte Anschlagseiten aufweist, gegen die die Leiterplatte durch den Schnappverschluss gespannt in Position gehalten ist.

19. Lichtkontrasttaster (1) nach Anspruch 18, **dadurch gekennzeichnet, dass** die Anschlagseiten durch Kammerwände der ersten Kammer (34) gebildet sind.

20. Lichtkontrasttaster (1) nach einem der vorhergehenden Ansprüche 17 oder 19, **dadurch gekennzeichnet, dass** die Leiterplatte (48) beidseitig mit Sendelementen (4) bestückbar ist.

21. Lichtkontrasttaster (1) nach einem der vorhergehenden Ansprüche 9 bis 20, **dadurch gekennzeichnet, dass** der Tubus (32) eine Öffnung (70,71) für ein Monitorempfangselement (18), insbesondere eine Monitordiode (72) aufweist.

22. Lichtkontrasttaster (1) nach einem der vorhergehenden Ansprüche 9 bis 21 **dadurch gekennzeichnet, dass** der Tubus (32) Ausrichtzapfen (74) aufweist zur ausgerichteten Aufnahme in entsprechende Zapfenöffnungen eines Gehäuses (3) des Lichtkontrasttasters.

## Claims

1. Light contrast scanner (1) for recognizing marks and/or colours
- having an opto-transmitter (2) with spatially neighbouring transmitting elements (4), in particular light-emitting diodes, for emitting transmitted light of a number of different wavelength regions, in particular in the red, green and blue wavelength region of the light by means of a transmitting optics (10),
- having an opto-receiver (12) for receiving reflected or re-emitted transmitted light,
- having a control and evaluation circuit (16),
- and having at least one means for thoroughly mixing (22) different colour components of the transmitted light, and
- the means are formed by a light guide (22),
**characterized in that**
- the opto-transmitter (2) and the light guide (22) are arranged in a common tube (32).

2. Light contrast scanner (1) according to Claim 1, **characterized in that** the length of the light guide (22) is at least 3.5 times a transverse dimension.

3. Light contrast scanner (1) according to one of the preceding claims, **characterized in that** the light guide (22) is designed as a lens on the coupling surface facing the opto-transmitter (2).

4. Light contrast scanner (1) according to one of the preceding claims, **characterized in that** the light guide (22) has a rectangular cross section.

5. Light contrast scanner (1) according to Claim 4, **characterized in that** the length of the light guide (22) is more than 7 times the shorter side of the rectangular cross section.

6. Light contrast scanner (1) according to one of the preceding claims, **characterized in that** the light guide (22) consists of plastic transparent to the transmitted light.

7. Light contrast scanner (1) according to one of the preceding claims, **characterized in that** the light guide (22) is produced by the injection moulding method.

8. Light contrast scanner (1) according to one of the preceding claims, **characterized in that** at its light exit end (28), the light guide (22) has a mounting plate (30) which is in one piece with the light guide (22).

9. Light contrast scanner (1) according to Claim 8, **characterized in that** the mounting plate (30) is connected to the light guide (22) only at the corners of the rectangular cross section and is arranged perpendicular to the light guide (22).

10. Light contrast scanner (1) according to Claim 9, **characterized in that** the tube (32) has a first chamber (34), a second chamber (36) and a hose-shaped connection (38) of the two chambers.

11. Light contrast scanner (1) according to Claim 10, **characterized in that** the light guide (22) is arranged in the hose-shaped connection (38) and the coupling surface (24) of the light guide is arranged in the direction of the first chamber (34).

12. Light contrast scanner (1) according to one of the preceding claims, **characterized in that** a diaphragm (40) is arranged at the light exit end (28) of the light guide (22).

13. Light contrast scanner (1) according to Claim 12, **characterized in that** the diaphragm (40) has a latching mechanism (42) for mounting in the second chamber (36) of the tube (32).

14. Light contrast scanner (1) according to Claims 12 and 13, **characterized in that** the second chamber (36) has an insertion opening (44) for inserting the diaphragm (40).

15. Light contrast scanner (1) according to Claim 14, **characterized in that** the mounting plate (30) of the light guide (22) is held positioned in the tube (32) by means of the diaphragm (40).

16. Light contrast scanner (1) according to Claim 15, **characterized in that** provided in the second chamber (36) is a mounting plate receptacle (46) with sides arranged in the shape of a wedge for receiving the mounting plate (30) in an adjusted fashion.

17. Light contrast scanner (1) according to one of the preceding Claims 10 to 16, **characterized in that** the opto-transmitter (2) is arranged on a printed circuit board (48), and the first chamber (34) has a printed circuit board receptacle (57) which has a slot (52) for receiving a nose (54) of the printed circuit board (48), and a wedge spring lock (56) for receiving a side of the printed circuit board (48) averted from the nose (54), which is designed as an obtuse tip (58).

18. Light contrast scanner according to Claim 17, **characterized in that** the printed circuit board receptacle (57) has two neighbouring stop sides against which the printed circuit board is held clamped in position by the spring lock.

19. Light contrast scanner (1) according to Claim 18, **characterized in that** the stop sides are formed by chamber walls of the first chamber (34).

20. Light contrast scanner (1) according to one of the preceding Claims 17 or 19, **characterized in that** the printed circuit board (48) can be fitted on both sides with transmitting elements (4).

21. Light contrast scanner (1) according to one of the preceding Claims 9 to 20, **characterized in that** the tube (32) has an opening (70, 71) for a monitor receiving element (18), in particular a monitor diode (72).

22. Light contrast scanner (1) according to one of the preceding Claims 9 to 21, **characterized in that** the tube (32) has aligning pins (74) for being received in an aligned fashion in corresponding pin openings of a housing (3) of the light contrast scanner.

## Revendications

1. Palpeur de contraste de lumière (1) pour la reconnaissance de marques et/ou de couleurs, comportant
- un émetteur de lumière (2) avec des éléments d'émission (4) voisins dans l'espace, en particulier des diodes d'émission de lumière (6) pour l'envoi de lumière d'émission de plusieurs plages de longueurs d'ondes différentes, en particulier dans la plage de longueurs d'ondes rouges, vertes et bleues de la lumière par une optique d'émission (10),
- un récepteur de lumière (12) pour la réception de lumière d'émission réfléchie ou réémise,
- un circuit de commande et d'analyse (16)
- et au moins un moyen pour le mélange (22) de différentes fractions de couleur de la lumière d'émission et
- le moyen étant formé par un guide de lumière (22)
**caractérisé en ce que**,
- l'émetteur de lumière (2) et le guide de lumière (22) sont disposés dans un tube (32) commun.

2. Palpeur de contraste de lumière (1) selon la revendication 1, **caractérisé en ce que** la longueur du guide de lumière (22) fait au moins 3,5 fois une dimension transversale.

3. Palpeur de contraste de lumière (1) selon l'une quelconque des revendications précédentes, **caractérisé en ce que** le guide de lumière (22) est réalisé sous forme de lentille sur la surface d'injection associée à l'émetteur de lumière (2).

4. Palpeur de contraste de lumière (1) selon l'une quelconque des revendications précédentes, **caractérisé en ce que** le guide de lumière (22) présente une section rectangulaire.

5. Palpeur de contraste de lumière (1) selon la revendication 4, **caractérisé en ce que** la longueur du guide de lumière (22) fait au moins 7 fois le côté le plus court de la section rectangulaire.

6. Palpeur de contraste de lumière (1) selon l'une quelconque des revendications précédentes, **caractérisé en ce que** le guide de lumière (22) est à base de plastique transparent pour la lumière d'émission.

7. Palpeur de contraste de lumière (1) selon l'une quelconque des revendications précédentes, **caractérisé en ce que** le guide de lumière (22) est fabriqué par le procédé de moulage par injection.

8. Palpeur de contraste de lumière (1) selon l'une quelconque des revendications précédentes, **caractérisé en ce que** le guide de lumière (22) présente sur son côté de sortie de lumière (28) une plaque de montage (30) qui est d'un seul tenant avec le guide de lumière (22).

9. Palpeur de contraste de lumière (1) selon la revendication 8, **caractérisé en ce que** la plaque de montage (30) est reliée au guide de lumière (22) seulement aux angles de la section rectangulaire et est disposée perpendiculairement au guide de lumière (22).

10. Palpeur de contraste de lumière (1) selon la revendication 9, **caractérisé en ce que** le tube (32) présente une première chambre (34), une seconde chambre (36) et une liaison (38) en forme de flexible entre les deux chambres.

11. Palpeur de contraste de lumière (1) selon la revendication 10, **caractérisé en ce que** le guide de lumière (22) est disposé dans la liaison (38) en forme de flexible et la surface d'injection (24) du guide de lumière est disposé en direction de la première chambre (34).

12. Palpeur de contraste de lumière (1) selon l'une quelconque des revendications précédentes, **caractérisé en ce qu'**un obturateur (40) est disposé sur le côté de sortie de lumière (28) du guide de lumière (22).

13. Palpeur de contraste de lumière (1) selon la revendication 12, **caractérisé en ce que** l'obturateur (40) présente un mécanisme d'encliquetage (42) pour le montage dans la seconde chambre (36) du tube (32).

14. Palpeur de contraste de lumière (1) selon les revendications 12 et 13, **caractérisé en ce que** la seconde chambre (36) présente une ouverture d'introduction (44) pour l'introduction de l'obturateur (40).

15. Palpeur de contraste de lumière (1) selon la revendication 14, **caractérisé en ce que** la plaque de montage (30) du guide de lumière (22) est maintenue positionnée dans le tube (32) au moyen de l'obturateur (40).

16. Palpeur de contraste de lumière (1) selon la revendication 15, **caractérisé en ce qu'**un logement de plaque de montage (46) est prévu dans la seconde chambre (36) avec des côtés disposés en forme de clavettes pour le logement ajusté de la plaque de montage (30).

17. Palpeur de contraste de lumière (1) selon l'une quelconque des revendications 10 à 16, **caractérisé en ce que** l'émetteur de lumière (2) est disposé sur une plaquette de circuits imprimés (48) et la première chambre (34) présente un logement de plaquette de circuits imprimés (57) qui présente une fente (52) pour le logement d'un ergot (54) de la plaquette de circuits imprimés (48) et une fermeture à encliquetage à clavette (56) pour le logement d'un côté, opposé à l'ergot (54), de la plaquette de circuits imprimés (48), qui est conçu sous forme de pointe (58) émoussée.

18. Palpeur de contraste de lumière (1) selon la revendication 17, **caractérisé en ce que** le logement de la plaquette de circuits imprimés (57) présente deux côtés de butée voisins contre lesquels la plaquette de circuits imprimés est maintenue tendue en position par la fermeture à encliquetage.

19. Palpeur de contraste de lumière (1) selon la revendication 18, **caractérisé en ce que** les côtés de butée sont formés par des parois de chambre de la première chambre (34).

20. Palpeur de contraste de lumière (1) selon l'une quelconque des revendications 17 ou 19 précédentes, **caractérisé en ce que** la plaquette de circuits imprimés (48) peut être exploitée des deux côtés avec des éléments d'émission (4).

21. Palpeur de contraste de lumière (1) selon l'une quelconque des revendications 9 à 20 précédentes, **caractérisé en ce que** le tube (32) présente une ouverture (70, 71) pour un élément de réception de moniteur (18), en particulier une diode de moniteur (72).

22. Palpeur de contraste de lumière (1) selon l'une quelconque des revendications 9 à 21 précédentes, **caractérisé en ce que** le tube (32) présente des tenons d'orientation (74) pour le logement orienté dans des ouvertures de tenon appropriées d'un boîtier (3) du palpeur de contraste de lumière.
